# EUROPÄISCHE PATENTANMELDUNG

(11) **EP 0 569 844 A1**
(43) Veröffentlichungstag der Anmeldung: **18.11.1993**
(21) Anmeldenummer: 93107308.4
(22) Anmeldetag: 05.05.1993
(51) Int. Cl.: B01D 17/025

(54) **Abscheider**

(30) Priorität: 12.05.1992 DE 4215565
(71) Anmelder: Kessel, Bernhard, D-85101 Lenting (DE)
(72) Erfinder: Kessel, Bernhard, D-85101 Lenting (DE)
(74) Vertreter: Kinkeldey, Hermann, Dr.-Ing.

(57) **Zusammenfassung**

Bei einem Leichtstoffabscheider von zylindrischer Form ist der direkte Weg vom Zulaufanschluß bis zum Ablaufanschluß zu kurz, um alle Leichtstoffanteile aussondern zu können. Eine Wegverlängerung wird vom Zulaufanschluß über die Überlauföffnung zum Ablaufanschluß durch die seitliche Verlegung der Überlauföffnung an die seitliche Innenwand und ggf. durch baulich eingegliederte strömungsrichtungändernde Mittel erreicht.

## Beschreibung

Die Erfindung betrifft einen Abscheider der im Oberbegriff des Patentanspruchs 1 angegebenen Art.

Bei derartigen, genormten und aus Kunststoff bestehenden Abscheidern ist der Zulaufanschluß diametral auf den Ablaufanschluß ausgerichtet. Die Trennwand verläuft symmetrisch konkav vor dem Zulaufanschluß und zwischen den Innenwänden des Grundkörpers, so daß das Volumen bzw. die horizontale Querschnittsfläche der Schlammfangkammer zum Volumen bzw. der horizontalen Querschnittsfläche der Abscheidekammer in einem Verhältnis von ca. 1:2,5 liegt. Die Überlauföffnung befindet sich in der Mitte der Trennwand, so daß sich ein direkter horizontaler Strömungsweg (mit vertikalen Umlenkungen über Prall- und Stauwände) vom Zulaufanschluß zum Ablaufanschluß ergibt. Bei einem Durchmesser von ca. 1,5 m für den Grundkörper entsteht so ein geradliniger horizontaler Strömungsweg von nur ca. 65 cm von der Prallwand hinter der Überlauföffnung bis zur Stauwand vor der Ablauföffnung. Da die zu reinigende Flüssigkeit das Bestreben hat, den kürzesten und widerstandsärmsten Weg zu nehmen, werden die abzuscheidenden Stoffe nicht zufriedenstellend ausgeschieden, sondern zu einem erheblichen Teil mit ausgeschwemmt, weil dieser vorerwähnte kurze Strömungsweg einer für einen guten Abscheideeffekt wichtigen Beruhigung der Flüssigkeit in der Abscheidekammer entgegenwirkt. Die unter der Prallwand hinter der Überlauföffnung austretende Flüssigkeit gelangt fast überhaupt nicht zur Innenwand des Grundkörpers. Vielmehr steht in diesen Bereichen schon gut gereinigte Flüssigkeit mehr oder minder unbeweglich, während sich bei Zulauf durch die Überlauföffnung eine markante Strömung relativ stark verschmutzter Flüssigkeit auf dem kurzen Strömungsweg bis unter die Stauwand vor dem Ablaufanschluß bildet. Mit anderen Worten wird bei kontinuierlich zufließender Flüssigkeit das ohnedies gegenüber der Schlammfangkammer vergrößerte Volumen oder die vergrößerte Querschnittsfläche der Abscheidekammer nur ungenügend genutzt.

Der Erfindung liegt die Aufgabe zugrunde, einen Abscheider der eingangs genannten Art zu schaffen, der sich durch ein verbessertes Abscheideverhalten gerade bei Zulauf von zu reinigender Flüssigkeit auszeichnet.

Die gestellte Aufgabe wird mit den im kennzeichnenden Teil des Patentanspruchs 1 enthaltenen Merkmalen gelöst.

Die von vornherein baulich in den Abscheider integrierten Mittel zwingen die in die Abscheidekammer einlaufende Flüssigkeit in einen vom direkten horizontalen Strömungsweg abweichenden und wesentlich längeren Strömungsweg zum Ablaufanschluß. Dadurch ergibt sich eine wirkungsvolle Beruhigung in der Flüssigkeit und ein verstärkter Abscheideeffekt, so daß die abzuscheidenden Stoffe überhaupt nicht mehr oder nur mehr in vernachlässigbarem Maß durch den Ablaufanschluß ausgeschwemmt werden. Das Volumen bzw. die horizontale Querschnittsfläche der Abscheidekammer wird optimal für die Beruhigung der Flüssigkeit und zum wirkungsvollen Abscheiden genutzt. Die Mittel sind so ausgelegt, daß störende Turbulenzen in der Strömung unterdrückt werden und eine weitgehend laminare Strömung entsteht, die für das Abscheiden günstig ist. Der Abscheider entspricht den genormten Vorschriften hinsichtlich der Volumina der beiden Kammern, des Durchsatzvermögens, der Größe der Überlauföffnung und der Niveauunterschiede zwischen den Kammern und den Anschlüssen. In vorteilhafter Weise ist aber trotz gleichen äußeren Erscheinungsbildes überraschend das Abscheideverhalten bei Zulauf verbessert.

Eine baulich einfache und zweckmäßige Ausführungsform geht aus Anspruch 2 hervor. Die den Strömungsweg verlängernden Mittel bestehen primär aus der gegenüber dem direkten Strömungsweg heraus seitlich versetzten Überlauföffnung, die die in die Abscheidekammer eintretende Flüssigkeit zu einer Strömung in der Nähe der Innenwand des Grundkörpers in einen längeren Weg zwingt. Dabei kann sich die verschmutzte Flüssigkeit gut beruhigen. Die abzuscheidenden Stoffe steigen ungehindert auf. Die am Ablaufanschluß austretende Flüssigkeit ist weitgehend gereinigt.

Bei der Ausführungsform gemäß Anspruch 3 wird der längstmögliche Strömungsweg erzwungen. Außerdem strömt die Flüssigkeit in der Abscheidekammer der Innenwand des Grundkörpers entlang, so daß dort keine beruhigten aber stehenden Flüssigkeitsmengen auftreten. Außerdem scheiden sich die Leichtstoffe an der Innenwand leichter ab.

Baulich zweckmäßig ist das Merkmal von Anspruch 4. Die Festlegung der Prallwand ist damit noch einfacher und günstiger.

Bei der Ausführungsform gemäß Anspruch 5 werden verlängerte Strömungswege gebildet. Jede Überlauföffnung kann relativ schmal ausgebildet sein, wodurch die Flüssigkeit zu einer Bewegung nahe der Innenwand des Grundkörpers in der Abscheidekammer gezwungen wird. Außerdem ergibt sich eine Strömungswegverlängerung bereits in der Schlammfangkammer, in der durch die Aufzweigung und die Wegverlängerung die Flüssigkeit intensiv durchmischt wird. Das ganze Volumen bzw. die gesamte horizontale Querschnittsfläche der Abscheidekammer wird für die Beruhigung der Flüssigkeit genutzt.

Eine alternative, vorteilhafte Ausführungsform geht ferner aus Anspruch 6 hervor. Obwohl der Zulauf- und der Ablaufanschluß an den beiden Seiten der Trennwand ganz nahe aneinanderliegen, wird die Flüssigkeit zu günstigen Umwegen gezwungen, um vom Zulaufanschluß zum Ablaufanschluß zu gelangen. Sowohl in der Schlammfangkammer als auch in der Abscheidekammer wird der Strömungsweg bewußt verlängert. Der Bereich, in dem die verschmutzte Flüssigkeit unter der Prallwand in der Abscheidekammer austritt, liegt optimal weit entfernt von der Stauwand vor dem Ablaufanschluß. Die Flüssigkeit bewegt sich entlang der Innenwand des Grundkörpers in der Abscheidekammer und beruhigt sich dabei. Dieser Weg ist deutlich größer als der halbe Umfang des Grundkörpers.

Eine weitere besonders wichtige Ausführungsform geht aus Anspruch 7 hervor. Die Strömungsumleit-Wandelemente ergeben eine zusätzliche Strömungswegverlängerung für die Flüssigkeit, so daß diese auch bei permanentem Zulauf ausreichend lange Zeit zur Beruhigung zur Verfügung hat.

Bei der Ausführungsform gemäß Anspruch 8 wird die Strömung jeweils von der Innenwand weg nach innen umgeleitet.

Bei der Ausführungsform gemäß Anspruch 9 wird die Strömung gezielt zur Innenwand hingeführt.

Die Ausführungsform gemäß Anspruch 10 ist hinsichtlich der Reinigung und der Beruhigung der zu reinigenden Flüssigkeit günstig. Da die Strömungsumleit-Wandelemente stehend angeordnet sind, können die abzuscheidenden Stoffe ungehindert hochsteigen, sobald sich die Flüssigkeit ausreichend zu beruhigen beginnt.

Anhand der Zeichnung werden beispielhafte Ausführungsformen des Erfindungsgegenstandes erläutert.

Es zeigt:
- Figur 1: einen Vertikalschnitt einer ersten Ausführungsform eines Abscheiders,
- Figur 2: einen zugehörigen Horizontalschnitt in der Ebene II-II,
- Figur 3: einen Vertikalschnitt einer zweiten Ausführungsform und
- Figur 4: einen zugehörigen Horizontalschnitt in der Ebene IV-IV.

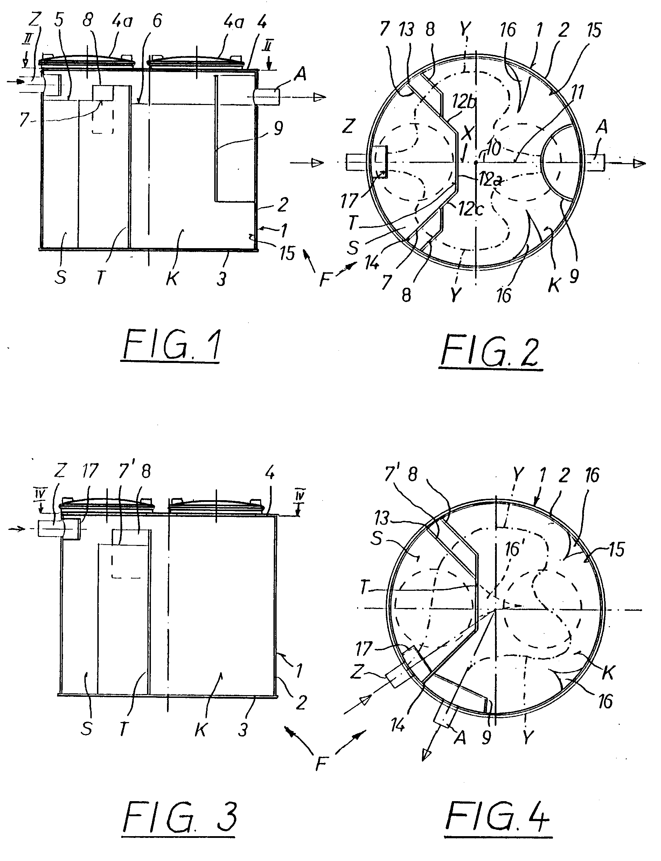

Ein normgerechter Abscheider F gemäß den Figuren 1 und 2, insbesondere ein Leichtstoff- oder Fettabscheider, weist einen Grundkörper 1 aus Kunststoff, z.B. HD-PE, mit einer zylindrischen Wand 2, einem kreisförmigen Boden 3 und einer kreisförmigen Deckwand 4 mit Deckeln 4a auf. Auf einen hochliegenden Zulaufanschluß Z ist ein etwas tieferliegender Ablaufanschluß A diametral ausgerichtet. Der Zulauf- und Ablaufanschluß A liegen in einer die Mittelachse 10 des Grundkörpers 1 schneidenden Vertikal-Ebene 11. Im Grundkörper 1 ist vor dem Zulaufanschluß Z eine Trennwand T stehend angeordnet, die den Innenraum des Grundkörpers 1 in eine zulaufseitige Schlammfangkammer S und eine ablaufseitige Abscheidekammer K unterteilt. Das Flüssigkeitsniveau in der Schlammfangkammer S ist mit 5 angedeutet. Dieses liegt geringfügig unterhalb des unteren Randes des Zulaufanschlusses Z. Das Flüssigkeitsniveau in der Abscheidekammer K ist mit 6 angedeutet und liegt geringfügig oberhalb der Unterkante des Ablaufanschlusses A.

Vor dem Zulaufanschluß Z ist eine Stau- oder Prallwand 17 vorgesehen. Vor dem Ablaufanschluß A ist eine vertikal verlaufende, hier bogenförmig gekrümmte Stauwand 9 angeordnet, die bis in die Nähe des Bodens 3 reicht und oben kurz vor der Deckwand 4 endet.

In der Trennwand T, die in bezug auf den Zulaufanschluß Z konkav gekrümmt oder konkav aus Segmenten 12a, 12b und 12c zusammengesetzt ist, sind zwei gegenüber der Vertikal-Ebene 11 zur Seite versetzte Überlauföffnungen 7 ausgespart. Hinter jeder Überlauföffnung 7 befindet sich eine Prallwand 8, die an einer Seite an die Trennwand T und an der anderen Seite an die mit 15 bezeichnete Innenwand des Grundkörpers 1 angeschlossen ist. Die Trennwand T ist an ihren beiden Seiten in Verbindungsbereichen 13, 14 direkt an die Innenwand 15 angeschlossen.

In Figur 2 ist angedeutet, daß an der Innenwand 15 jeweils wenigstens ein Strömungsumleit-Wandelement 16 befestigt ist, das ins Innere der Abscheidekammer K ragt. Es können diese Wandelemente 16 auch kürzer ausgebildet oder mehrere davon angeordnet sein. Jedes Wandelement 16 beginnt zweckmäßigerweise oberhalb des Bodens 3 und endet unterhalb des Flüssigkeitsniveaus 6 von der Schlammfangkammer S. Es ist aber auch denkbar, jedes Wandelement 16 direkt am Boden zu befestigen und bis über das Niveau 6 nach oben zu verlängern. Die Wandelemente 16 haben den Prallwänden 8 zugewandt konkave Krümmungen.

In Figur 2 wäre der direkte horizontale Strömungsweg X entlang der Vertikal-Ebene 11. Tatsächlich wird aber der Strömungsweg erheblich verlängert und in zwei Strömungswege Y aufgeteilt, weil die Flüssigkeit von der Schlammfangkammer S aus zunächst zur Seite und durch die seitlich versetzt angeordneten Überlauföffnungen 7 gezwungen wird, ehe sie unter den Prallwänden 8 hindurch entlang der Innenwand 15 strömt und dann - falls die Strömungsumleit-Wandelemente 16 vorgesehen sind - mindestens einmal nach innen zur Abscheidekammer K umgeleitet wird, ehe sie unter der Stauwand 9 in den Ablaufanschluß A gelangt.

Es würde auch ausreichen, nur eine dann im Durchmesser größere Überlauföffnung 7 seitlich versetzt anzuordnen, um eine Verlängerung des Strömungsweges zu erzwingen.

Ein Strömungsumleit-Wandelement 16 könnte auch an der Trennwand T angeordnet sein und sich von dieser in Richtung zur Innenwand 15 hin erstrecken.

Bei der zweiten Ausführungsform gemäß den Figuren 3 und 4 sind der Zulaufanschluß Z und der Ablaufanschluß A in einem eng in Umfangsrichtung begrenzten Bereich des Grundkörpers 1 an den beiden Seiten des Verbindungsbereiches 14 zwischen der Trennwand T und der Innenwand 15 angeordnet. Es ist nur eine Überlauföffnung 7' in der Trennwand T vorgesehen, die in der Abscheidekammer K von der Prallwand 8 umfaßt wird. Die Überlauföffnung 7' befindet sich nahe oder direkt angrenzend beim Verbindungsbereich 13. Vor den Zulauf- und Ablaufanschlüssen Z, A sind wiederum Prall- oder Stauwände 17, 9 vorgesehen. Der Strömungsweg vom Zulaufanschluß Z zum Ablaufanschluß A ist deutlich verlängert, weil die Flüssigkeit entlang der Innenwand 15 strömen muß und sich dabei ausreichend beruhigen kann, ehe sie unter die Stauwand 9 eintritt.

In der Abscheidekammer K können - falls dies für zweckmäßig erachtet wird - wiederum Strömungsumleit-Wandelemente 16 an der Innenwand 15 vorgesehen sein. Es ist aber auch denkbar, zusätzlich oder alternativ ein Strömungsumleit-Wandelement 16' an der Trennwand T anzubringen, das sich in Richtung zur Innenwand 15 erstreckt und die Strömung auf einen größeren Strömungsweg verteilt.

In den Figuren 2 und 4 sind die Deckel 4a strichliert angedeutet.

## Patentansprüche

1. Abscheider, insbesondere Fett- oder Leichtstoffabscheider, mit einem Zu- und Ablaufanschlüsse aufweisenden zylindrischen Grundkörper, in dem zwischen einer zulaufseitigen Schlammfangkammer und einer ablaufseitigen Abscheidekammer eine stehende Trennwand angeordnet ist, mit wenigstens einer Überlauföffnung in der Trennwand, und mit einer in der Abscheidekammer die Überlauföffnung umfassenden Prallwand, dadurch gekennzeichnet, daß im Abscheider (F) in den direkten horizontalen Strömungsweg (Y) vom Zulaufanschluß (Z) über die Überlauföffnung (7, 7') zum Ablaufanschluß (A) den Strömungsweg (Y) verlängernde Mittel baulich eingegliedert sind.

2. Abscheider nach Anspruch 1, dadurch gekennzeichnet, daß bei diametraler Ausrichtung von Zu- und Ablaufanschluß (Z, A) und symmetrisch, vorzugsweise konkav gekrümmt, vor dem Zulaufanschluß (Z) angeordneter Trennwand (T) die Überlauföffnung (7) in der Trennwand (T) und die Prallwand (8) gegenüber einer gedachten, die Mittelachse (10) des Grundkörpers (1) durchsetzenden Verbindungsebene (11) der diametral ausgerichteten Zu- und Ablaufanschlüsse (Z, A) in Richtung zur Innenwand (15) des Grundkörpers (1) zur Seite versetzt angeordnet sind.

3. Abscheider nach Anspruch 2, dadurch gekennzeichnet, daß die Überlauföffnung (7) an der Innenwand (15) des Grundkörpers (1) angrenzt.

4. Abscheider nach den Ansprüchen 2 und 3, dadurch gekennzeichnet, daß die Prallwand (8) an die Innenwand (15) des Grundkörpers (1) angeschlossen ist.

5. Abscheider nach den Ansprüchen 2 bis 4, dadurch gekennzeichnet, daß an jeder Seite der gedachten, die Mittelachse (10) des Grundkörpers (1) durchsetzenden Verbindungsebene (11) der diametral ausgerichteten Zu- und Ablaufanschlüsse (Z, A) in der Trennwand (T) eine seitlich versetzte und an die Innenwand (15) des Grundkörpers (1) angrenzende Überlauföffnung (7) mit einer Prallwand (8) vorgesehen ist.

6. Abscheider nach Anspruch 1, dadurch gekennzeichnet, daß der Zulaufanschluß (Z) und der Ablaufanschluß (A) jeweils benachbart zum selben Verbindungsbereich (14) zwischen der Trennwand (T) und der Grundkörper-Innenwand (15) in einem eng begrenzten Umfangsbereich des Grundkörpers (1) angeordnet sind, und daß die Überlauföffnung (7') in der Trennwand (T) zum anderen Verbindungsbereich (13) zwischen der Trennwand (T) und der Grundkörper-Innenwand (15) hin versetzt liegt.

7. Abscheider nach den Ansprüchen 1 bis 6, dadurch gekennzeichnet, daß in der Abscheidekammer (K) zwischen der die Überlauföffnung (7, 7') umfassenden Prallwand (8) und einer den Ablaufanschluß (A) umfassenden Stauwand (9) wenigstens ein stehendes Strömungsumleit-Wandelement (16, 16') angeordnet ist.

8. Abscheider nach Anspruch 7, dadurch gekennzeichnet, daß das Strömungsumleit-Wandelement (16) an der Grundkörper-Innenwand (15) angebracht ist und sich von der Innenwand (15) nach innen in die Abscheidekammer (K) erstreckt.

9. Abscheider nach Anspruch 7, dadurch gekennzeichnet, daß wenigstens ein Strömungsumleit-Wandelement (16') an der Trennwand (T) angeordnet ist und sich von der Trennwand (T) in Richtung zur Grundkörper-Innenwand (15) erstreckt.

10. Abscheider nach den Ansprüchen 7 bis 9, dadurch gekennzeichnet, daß das Strömungsumleit-Wandelement (16, 16') oberhalb des Grundkörperbodens (3) beginnt und/oder unterhalb des Flüssigkeitsniveaus (6) in der Abscheidekammer (K) endet.
